# EUROPÄISCHE PATENTSCHRIFT

(11) **EP 0 894 358 B1**
(45) Veröffentlichungstag und Bekanntmachung des Hinweises auf die Patenterteilung: **24.11.1999**
(21) Anmeldenummer: 97920588.7
(22) Anmeldetag: 10.04.1997
(51) Int. Cl.: H02K 3/24, H02K 9/00

(54) **ROTORWICKLUNG FÜR EINE ELEKTRISCHE MASCHINE**
ROTOR WINDING FOR AN ELECTRIC MACHINE
ENROULEMENT DE ROTOR POUR MACHINE ELECTRIQUE

(30) Priorität: 17.04.1996 DE 19615194
(43) Veröffentlichungstag der Anmeldung: 03.02.1999
(73) Patentinhaber: SIEMENS AKTIENGESELLSCHAFT, 80333 München (DE)
(72) Erfinder: DREHER, Thomas, D-46147 Oberhausen (DE)
(86) Internationale Anmeldenummer: DE9700734
(87) Internationale Veröffentlichungsnummer: WO9739513

(56) Entgegenhaltungen:
- DE-B- 1 146 186
- US-A- 2 787 721
- US-A- 4 543 503

## Beschreibung

Die Erfindung betrifft eine Rotorwicklung für eine elektrische Maschine, mit einer Rotationsachse und einer Vielzahl elektrisch leitfähiger Windungen, die bezüglich der Rotationsachse radial gestapelt sind und mehrere Axialabschnitte sowie mehrere Tangentialabschnitte bilden, wobei jeder Axialabschnitt etwa gerade geformt sowie etwa parallel zur Rotationsachse ausgerichtet ist und zugehörige erste Kühlkanäle besitzt, welche bezüglich der Rotationsachse meridional ausgerichtet sind und alle Windungen durchqueren, und wobei jeder Tangentialabschnitt um die Rotationsachse gebogen ist, zwei Axialabschnitte miteinander verbindet und zugehörige zweite Kühlkanäle besitzt.

Eine solche Rotorwicklung geht hervor aus der EP 0 160 887 B1, der DE 37 00 508 C2, DE-AS 10 11 048 sowie dem Artikel aus "Electrical Times", 10.03.1966, S. 354.

Unter einer bezüglich einer Achse "meridionalen" Richtung wird eine Richtung verstanden, die in einer die Achse enthaltenden Ebene liegt. Eine Richtung ist demnach meridional, wenn sie zusammensetzbar ist aus einer zur Achse radialen und einer zur Achse parallelen Komponente. Diese Verwendung des Begriffs "meridional" entspricht weitgehend der Verwendung auf dem Gebiet der Strömungsmaschinen und dem Gebiet der Geodäsie.

Hinweise zum Aufbau, zur Herstellung und zum Einsatz einer Rotorwicklung, insbesondere einer Rotorwicklung, die für eine dynamoelektrische Maschine nach Art eines Turbogenerators bestimmt ist, gehen hervor aus dem Aufsatz "Läuferwicklungen für Turbogeneratoren" von D.Lambrecht, enthalten in dem von H. Sequenz herausgegebenen Buch "Herstellung der Wicklungen elektrischer Maschinen", Springer-Verlag, Wien und New York 1973, Seiten 169-199. Von Interesse sind auch die Schriften DE-OS 16 13 196, DE-AS 10 36 370, EP 0 166 990 A1 sowie EP 0250 980 A1. Die DE-AS 11 46 186 behandelt einen Turbogenerator mit direkter Leiterkühlung der Rotorwicklung. Ein Tangentialabschnitt ist rechtwinklig mit einem Axialabschnitt verbunden. Der Tangentialabschnitt ist indirekt gekühlt und der Axialabschnitt ist als Hohlleiter ausgeführt, der von Kühlfluid durchströmt wird.

Die eingangs erwähnte EP 0 160 887 B1 zeigt eine Rotorwicklung, deren Axialabschnitte teilweise innerhalb eines Ballens, nämlich innerhalb von in dem Ballen vorgesehenen Nuten, und teilweise außerhalb des Ballens liegen. An beiden axialen Enden des Ballens bilden die jeweiligen außerhalb des Ballens liegenden Teile der Axialabschnitte zusammen mit den Tangentialabschnitten die sogenannten Wickelköpfe, in denen ein Tangentialabschnitt jeweils zwei Axialabschnitte miteinander verbindet und die außerhalb einer jeweiligen, entlang der Rotationsachse aus dem Ballen ragenden Welle angeordnet sind. Die Kühlung der gesamten Rotorwicklung erfolgt mittels eines Kühlgases, insbesondere Luft oder Wasserstoff. Von besonderem Interesse ist die Kühlung der Wickelköpfe der Rotorwicklung, und diese Kühlung erfolgt, indem das Kühlgas durch mäandrierende Kühlkanäle geführt wird, welche gebildet werden von den Wickelköpfen selbst und Füllstücken, die an den Wickelköpfen anliegen und in denen entsprechende Nuten vorgesehen sind. Eine solche Rotorwicklung hat sich in der praktischen Anwendung als besonders erfolgreich herausgestellt und hat es insbesondere ermöglicht, eine mit einer entsprechend ausgestatteten Rotorwicklung ausgestatteten Turbogenerator mit einer gegenüber den Möglichkeiten des vorigen Standes der Technik wesentlich erhöhten Leistung zu betreiben. Unter Benutzung einer solchen Rotorwicklung ist es möglich, einen mit Luft gekühlten Turbogenerator bei entsprechender Auslegung mit einer Leistung bis 300 MVA zu betreiben. Wird Wasserstoff als Kühlgas benutzt, so kann wegen dessen besseren Kühleigenschaften eine noch höhere Leistung erreicht werden.

In dem Artikel aus "Electrical Times", 10.03.1966, Seite 354, ist ein Rotor einer dynamoelektrischen Maschine mit Windungen beschrieben. Jede Windung ist in einer Nut des Rotors in einem Axialabschnitt geführt, welcher außerhalb der Nut µm 90° gebogen ist und in einen Tangentialabschnitt übergeht. Der Tangentialabschnitt sowie zumindest ein bis tief in die Nut hineinreichender Bereich des Axialabschnitts ist als Bohlleiterstruktur ausgeführt und wird somit direkt durch ein durch die Windung strömendes Kühlfluid gekühlt. In einem weiteren innerhalb der Nut befindlichen Bereich des Axialabschnitts wird dieser durch in radiale Richtung durch übereinander liegende Windungen hindurchströmendes Kühlfluid gekühlt.

In der US-PS 4,543,503 ist ein Kühlluftsystem für Rotorwindungen einer dynamoelektrischen Maschine beschrieben. Die Wickelköpfe der Rotorwindungen werden durch ein System von miteinander kommunizierenden Kühlkanälen gekühlt. Dabei wird durch die Zentrifugalwirkung des sich drehenden Rotors eine Niedrigdruckzone erzeugt, über die eine Pumpwirkung entsteht. Mit dieser Pumpwirkung wird Kühlgas durch das Kühlsystem geleitet.

Es besteht ein Interesse daran, eine Rotorwicklung der eingangs genannten Art unter Steigerung ihrer vorteilhaften Betriebseigenschaften strukturell zu vereinfachen, um, vorzugsweise unter Steigerung ihrer Leistung, eine Senkung ihrer Herstellkosten zu erreichen.

Zur Lösung dieser Aufgabe angegeben wird eine Rotorwicklung für eine elektrische Maschine, mit einer Rotationsachse und einer Vielzahl elektrisch leitfähiger Windungen, die bezüglich der Rotationsachse radial gestapelt sind und mehrere Axialabschnitte sowie mehrere Tangentialabschnitte bilden, wobei jeder Axialabschnitt etwa gerade geformt sowie etwa parallel zur Rotationsachse ausgerichtet ist und zugehörige erste Kühlkanäle besitzt, welche bezüglich der Rotationsachse meridional ausgerichtet sind und alle Windungen durchqueren, und wobei jeder Tangentialabschnitt um die Rotationsachse gebogen ist, zwei Axialabschnitte miteinander verbindet und zugehörige zweite Kühlkanäle besitzt, dadurch gekennzeichnet, daß jeder zweite Kühlkanal im Inneren einer jeweiligen Windung liegt und strömungstechnisch von den zugeordneten Axialabschnitten der Windung getrennt ist, wobei jeder zweite Kühlkanal in Umfangsrichtung mündet.

Demnach erfolgt die Kühlung der Tangentialabschnitte durch Kühlkanäle, die im Inneren der Windungen, soweit diese die Tangentialabschnitte bilden, verlaufen. Für die Kühlung der Axialabschnitte verbleibt es grundsätzlich bei der Kühlung durch meridional, insbesondere radial, ausgerichtete Kühlkanäle, wobei diese Art der Kühlung unter Umständen allerdings lediglich vorgesehen ist für diejenigen Teile der Axialabschnitte, die im Inneren des Ballens liegen, und kombiniert wird mit einer anderweitigen Kühlung für die Teile der Axialabschnitte, die in Wickelköpfen außerhalb des Ballens liegen.

Vorzugsweise liegen die Axialabschnitte teilweise innerhalb von Nuten eines Ballens sowie teilweise außerhalb eines Ballens, und die Tangentialabschnitte liegen alle außerhalb des Ballens. Dabei bilden die Tangentialabschnitte zusammen mit den außerhalb des Ballens liegenden Teilen der Axialabschnitte Wickelköpfe, wobei an jedem axialen Ende des Ballens jeweils ein Wickelkopf liegt. Dabei ist es bevorzugt, daß jeder erste Kühlkanal innerhalb einer jeweiligen Nut, also insbesondere innerhalb des Ballens, liegt. In diesem Zusammenhang ist es weiter bevorzugt, daß jedem Axialabschnitt zwischen jedem mit ihm verbundenen Tangentialabschnitt und dem Ballen zumindest ein etwa meridional mäandrierender dritter Kühlkanal zugeordnet ist, welcher außerhalb des Axialabschnitts angeordnet ist. Mit zusätzlichem Vorzug werden die dritten Kühlkanäle gebildet bei einer Rotorwicklung, welche mehrere bezüglich der Rotationsachse tangential nebeneinander angeordnete Axialabschnitte aufweist,wobei zwischen den Axialabschnitten angeordnete elektrisch isolierende Füllstücke mit entsprechenden Nuten versehen sind und jede solche Nut mit einem anliegenden Axialabschnitt einen dritten Kühlkanal bildet.

Bei der vorstehend zuletzt beschriebenen und vor allem bevorzugten Ausgestaltung gibt es also insgesamt drei Kühlkanalsysteme, umfassend die ersten Kühlkanäle für die Axialabschnitte innerhalb des Ballens, die zweiten Kühlkanäle für die Tangentialabschnitte in den Wickelköpfen und die dritten Kühlkanäle für die Axialabschnitte in den Wickelköpfen. Diese Ausgestaltung bietet ein besonders großes Maß an Flexibilität zur praktischen Auslegung, was dem anzustrebenden Zweck der Erzielung einer möglichst gleichmäßigen Verteilung der Temperatur über die Rotorwicklung in besonderer Weise dienlich ist.

Im Rahmen einer ebenfalls bevorzugten Weiterbildung hat der Ballen zwei axiale Enden, aus deren jedem eine jeweilige, unter die jeweiligen Tangentialabschnitte reichende Welle hervorragt, wobei an jedem axialen Ende die jeweiligen Tangentialabschnitte auf einem jeweiligen, bis zu dem Ballen reichenden und von der jeweiligen Welle beabstandeten Isolierzylinder angeordnet sind. Dabei sind also die Wickelköpfe der Rotorwicklung jeweils auf einem entsprechenden Isolierzylinder angeordnet. Zwischen jedem Isolierzylinder und der jeweiligen Welle verbleibt vorzugsweise ein Zwischenraum, welcher insbesondere für die Zu- und Abfuhr des verwendeten Kühlmittels genutzt wird. In diesem Zusammenhang hat vorzugsweise jeder Tangentialabschnitt eine Mitte sowie zwei Enden, wobei er an jedem Ende mit einem Axialabschnitt verbunden ist, und wobei jeder zweite Kühlkanal sich zu einem Ende sowie zur Mitte hin öffnet, und jeder Isolierzylinder hat an jedem Ende und jeder Mitte eines Tangentialabschnitts ein zugehöriges Loch, welches zu einem mittels radialer Wände zwischen dem Isolierzylinder und der Welle gebildeten Zufuhrkanal oder Abfuhrkanal führt. Der Isolierzylinder muß nicht notwendigerweise einteilig ausgeführt sein, er kann auch aus einzelnen, nicht notwendigerweise unmittelbar miteinander verbundenen Bauteilen gebildet werden. Der Isolierzylinder dient hauptsächlich dazu, unter dem Wickelkopf Zufuhr- und/oder Abfuhrkanäle für das Kühlgas vorzusehen und gegen unerwünschten Zu- oder Abfluß von Kühlgas abzudichten. Zu diesem Zweck kommen auch alternative Ausgestaltungen, insbesondere Anordnungen von T-förmigen Isolierstücken und dergleichen, in Betracht. Im Rahmen dieser Ausgestaltung kann eine sogenannte vierflutige Kühlung jedes Wickelkopfes realisiert werden, und dies insbesondere dann, wenn die Axialabschnitte in den Wickelköpfen in beschriebener Weise mit meridional mäandrierenden dritten Kühlkanälen versehen sind. Dabei kann die Zufuhr des Kühlmittels erfolgen an den Enden der Tangentialabschnitte, wo diese mit den Axialabschnitten verbunden sind; von jedem Ende führt dann ein erster Kühlmittelstrom durch die zweiten Kühlkanäle zur Mitte des Tangentialabschnitts und ein zweiter Strom durch die dritten Kühlkanäle in Richtung des Ballens, wo er in bekannter Weise abzuführen ist. In jedem Wickelkopf gibt es somit zu jedem Tangentialabschnitt und den damit verbundenen Teilen der Axialabschnitte vier zugehörige Kühlmittelströme, woraus sich die Bezeichnung "vierflutige Kühlung" erklärt.

Die Verbindung zwischen den Tangentialabschnitten und Axialabschnitten erfolgt vorzugsweise derart, daß jeder Tangentialabschnitt zwei Enden aufweist, an deren jedem er mit einem Ende eines zugehörigen Axialabschnittes verbunden, insbesondere hartverlötet, ist. Hierzu können die Axialabschnitte unabhängig von den Tangentialabschnitten gefertigt und erst später mit diesen verbunden werden, wobei die herzustellende Verbindung vorzugsweise eine hartgelötete Verbindung ist. In diesem Zusammenhang ist vorzugsweise jeder Tangentialabschnitt bezüglich der Rotationsachse radial-eben ausgerichtet, was insbesondere bedeutet, daß er aus einem geraden Halbzeug durch einfaches eindimensionales Biegen hergestellt werden kann. Diese Ausgestaltung beinhaltet vorzugsweise, daß ein Tangentialabschnitt etwa rechtwinklig auf jeden Axialabschnitt, mit dem er verbunden ist, stößt; die Rotorwicklung hat dann ausgeprägte "Ecken" an den Verbindungsstellungen zwischen Tangentialabschnitten und Axialabschnitten.

Die Rotorwicklung jedweder Ausgestaltung ist insbesondere bestimmt für und angeordnet in einer elektrischen Maschine, insbesondere einer dynamoelektrischen Großmaschine nach Art eines Turbogenerators.

Ein bevorzugtes Verfahren zum Betrieb einer Rotorwicklung jedweder Ausgestaltung umfaßt, daß die Rotorwicklung um die Rotationsachse rotiert, von einem elektrischen Strom durchflossen und mittels eines gasförmigen Kühlmittels, insbesondere Luft, welches durch die Kühlkanäle strömt, gekühlt wird.

Ausführungsbeispiele der Erfindung werden nachfolgend anhand der Zeichnung erläutert. Die Zeichnung ist zur Herausstellung bestimmter Merkmale teilweise schematisiert und/oder leicht verzerrt ausgeführt. Für eventuell nötige Ergänzungen der aus der Zeichnung erkennbaren Hinweise zur praktischen Ausführung wird auf die zitierten Dokumente des Standes der Technik, insbesondere den Aufsatz von D. Lambrecht, verwiesen. Im einzelnen zeigen:
- FIG 1: eine Rotorwicklung in besonders bevorzugter Ausführungsform, installiert an einem Ballen, in teilweise geschnittener Schrägansicht;
- FIG 2: eine weitere Ausführungsform der Rotorwicklung, in axialem Längsschnitt.

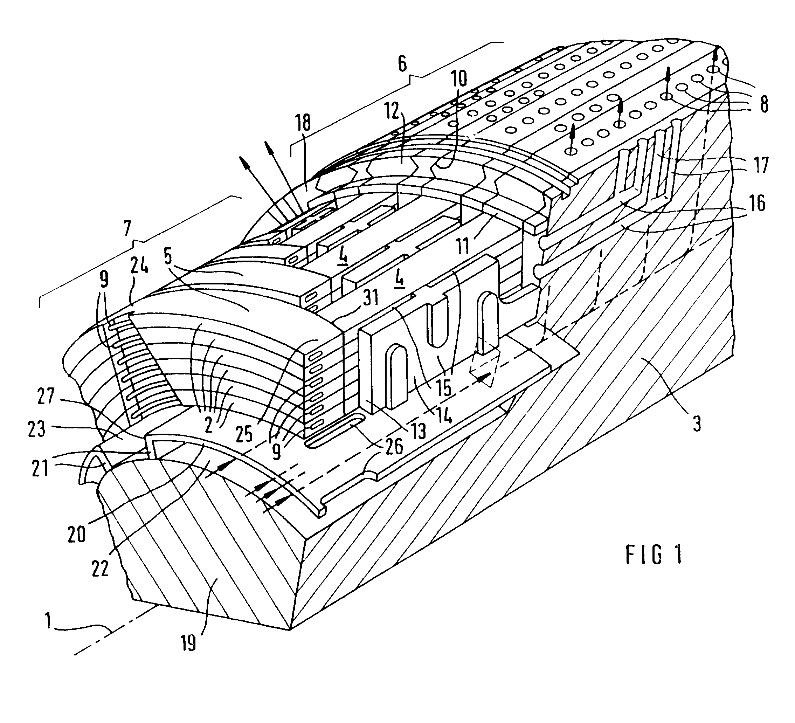

Die aus Figur 1 erkennbare Rotorwicklung ist axialsymmetrisch bezüglich einer Rotationsachse 1, um welche sie während ihres Betriebes in einer elektrischen Maschine, in diesem Falle einem Turbogenerator, rotieren muß, und außerdem spiegelsymmetrisch bezüglich einer nicht dargestellten, zur Rotationsachse 1 senkrechten Mittenebene. Die Rotorwicklung umfaßt eine Vielzahl von Windungen 2, welche bezüglich der Rotationsachse 1 etwa radial aufeinandergestapelt sind. Diese Windungen 2 sind elektrisch untereinander verschaltet und bilden eine Spulenanordnung, welche beim Betrieb ein Magnetfeld, insbesondere ein stationäres Magnetfeld, ausbildet.

Die Rotorwicklung wird getragen von einem Ballen 3, welcher gemäß üblicher Praxis als metallischer Monolith ausgebildet ist. Die Rotorwicklung hat Axialabschnitte 4, deren jeder etwa gerade geformt sowie etwa parallel zur Rotationsachse 1 ausgerichtet ist, sowie Tangentialabschnitte 5, deren jeder um die Rotationsachse 1 gebogen ist und zwei Axialabschnitte 4 miteinander verbindet. Die Axialabschnitte 4 liegen teilweise innerhalb des Ballens 3; entsprechende Teile der Axialabschnitte 4 bilden den Ballenbereich 6 der Rotorwicklung. Diejenigen Teile der Axialabschnitte 4, welche außerhalb des Ballens 3 angeordnet sind, sowie die Tangentialabschnitte 5 bilden sogenannte Wickelköpfe 7, von denen einer sichtbar ist.

Die Rotorwicklung wird bei ihrem Betrieb von elektrischen Strom in solcher Höhe durchflossen, daß es aufgrund des elektrischen Widerstandes der Rotorwicklung zur Produktion von Wärme in erheblichem Umfang kommt. Um diese Wärme abzuführen ist die Rotorwicklung gekühlt, und zwar mittels eines Kühlgases. Dieses fließt durch ein Kühlsystem der Rotorwicklung, nimmt die produzierte Wärme auf und führt sie ab. Zur Durchleitung des Kühlgases hat jeder Axialabschnitt zugehörige erste Kühlkanäle 8, von denen in Figur 1 nur Mündungen sichtbar sind, wobei jeder erste Kühlkanal 8 bezüglich der Rotationsachse 1 meridional, insbesondere radial, ausgerichtet ist und alle Windungen 2 durchquert. Zur Kühlung der Tangentialabschnitte 5 sind zweite Kühlkanäle 9 vorgesehen. Jeder zweite Kühlkanal 9 liegt dabei im Inneren einer jeweiligen Windung 2 und erstreckt sich somit entlang eines entsprechenden Tangentialabschnittes 5, ohne direkte strömungstechnische Verbindung mit einem wie auch immer gestalteten Kühlkanal des Axialabschnittes 4.

Bevor auf Einzelheiten des Kühlsystems näher eingegangen wird, sei zunächst die Befestigung der Rotorwicklung in dem Ballen 3 erläutert. Die Teile der Axialabschnitte 4 im Ballenbereich 6 der Rotorwicklung sind angeordnet in Nuten 10 des Ballens 3, wobei für jeden Axialabschnitt 4 eine Nut 10 vorgesehen ist. In jeder Nut 10 liegt über dem Axialabschnitt 4 eine Nutkopfisolierung 11, die in an sich bekannter Weise als Feder gestaltet oder um eine zusätzliche Federbeilage ergänzt sein kann. Über der Nutkopfisolierung 11 ist ein Verschlußkeil 12 angeordnet, welcher die Nut 10 kraftschlüssig verschließt und den jeweiligen Axialabschnitt 4 gegen die betrieblich in erheblicher Höhe auftretenden Zentrifugalkräfte in der Nut 10 fixiert.

Im Ausführungsbeispiel gemäß Figur 1 treten zu den ersten Kühlkanälen 8 und den zweiten Kühlkanälen 9 dritte Kühlkanäle 15 hinzu. Diese sind gebildet unter Zuhilfenahme von isolierenden Füllstücken 13, welche im Wickelkopf 7 jeweils zwei Axialabschnitte 4 voneinander distanzieren. Jedes isolierende Füllstück 13 hat Ausnehmungen 14, welche flache Nuten definieren, die zusammen mit jeweils einem anliegenden Axialabschnitt 4 die dritten Kühlkanäle 15 bilden. Jeder dritte Kühlkanal 15 erstreckt sich in einer meridional mäandrierenden Weise entlang eines Axialabschnittes 4 und mündet in axiale Bohrungen 16 im Ballen 3. Diese axialen Bohrungen 16 kommunizieren ihrerseits mit radialen Bohrungen 17, aus denen Kühlgas, welches durch die dritten Kühlkanäle 15 geflossen ist, aus dem Ballen 3 herausgelangen kann. Unter dem Wickelkopf 7 und distanziert von einem Wellenstück 19, welches sich ausgehend von einem axialen Ende 18 entlang der Rotationsachse 1 aus dem Ballen 3 erstreckt, ist ein Isolierzylinder 20 vorgesehen, auf dem die Tangentialabschnitte 5 sowie die zum Wickelkopf 7 gehörigen Teile der Axialabschnitte 4 angeordnet sind. Zwischen dem Isolierzylinder 20 und dem Wellenstück 19 sind radiale Wände 21 vergesehen, welche Zufuhrkanäle 22 sowie Abfuhrkanäle 23 für das Kühlgas definieren. Ein Abfuhrkanal 23 dient dabei zur Abfuhr von Kühlgas, welche im Bereich der jeweiligen Mitte 24 eines Tangentialabschnittes 5 aus den zweiten Kühlkanälen 9 ausgetreten ist, wofür jeder Tangentialabschnitt 5 entsprechende Ausnehmungen hat. Dabei tritt das Kühlgas an jeweiligen Enden 25 der Tangentialabschnitte aus Löchern 26, die zu einem Zufuhrkanal 22 unter dem Isolierzylinder 20 führen, in die Tangentialabschnitte 5 ein. Durch ein Loch 27 an einer Mitte 24 eines Tangentialabschnitts 5 gelangt das Kühlgas in den Abfuhrkanal 23. Die in Zufuhrkanäle 22 führenden Löcher 26 dienen auch zur Zufuhr von Kühlgas zu den dritten Kühlkanälen 15.

Das System der Kühlkanäle 9 und 15 jedes Wickelkopfes 7 bildet vier Fluten von Kühlgas, wovon zwei Fluten ausgehend von den Löchern 26 entlang der Rotationsachse 1 zum Ballen 3 gelangen und zwei weitere Fluten in etwa tangentialer Richtung von Löchern 26 zu Löchern 27 fließen. Das Kühlsystem kann daher als "Vierflutige Kühlung" bezeichnet werden.

Die Funktion der Füllstücke 13, des Isolierzylinders 20 und der Wände 21 ist, wie auch aus den vorangegangenen Ausführungen deutlich erkennbar, vor allem diejenige einer Leiteinrichtung für das die Rotorwicklung kühlende Kühlgas. Im Hinblick auf die Bildung und die Funktion dieser Leiteinrichtung ist die Aufteilung in Füllstücke 13, Isolierzylinder 20 und Wände 21 eine Wahl aus vielen, im Grunde gleichwertigen Alternativen. Bei der tatsächlichen Realisierung eines Rotors wie dargestellt in Figur 1 sind auch alternative Ausgestaltungen der Leiteinrichtung, beispielsweise aus Teilen mit T-förmigen Querschnitten, deren jedes beispielsweise eine Wand und einen Ausschnitt des Isolierzylinders enthält, in Betracht zu ziehen.

Die Verbindung der Axialabschnitte 4 mit den Tangentialabschnitten 5 erfolgt derart, daß Enden 25 der Tangentialabschnitte mit Enden 31 der Axialabschnitte 4 verbunden, insbesondere hartverlötet, werden. Man bildet dabei stumpfe Lötverbindungen, die allerdings mit fachmännisch geläufigen Mitteln problemlos und in bester Qualität herzustellen sind. An den Enden 25 und 31 ergeben sich ausgeprägte "Ecken" der Rotorwicklung, an denen Axialabschnitte 4 und Tangentialabschnitte 5 etwa rechtwinklig aneinanderstoßen, ohne strömungstechnische Verbindung für Kühlgas.

Die Vorzüge der Rotorwicklung der soeben beschriebenen Art sind bereits erläutert worden, worauf an dieser Stelle nochmals ausdrücklich verwiesen sei. Zusätzlich ist zu bemerken, daß durch das Vorsehen der Tangentialabschnitte 5 mit den zweiten Kühlkanälen 9 in beschriebener Art auf aufwendige Isolierteile zwischen jeweils zwei Tangentialabschnitten 5 verzichtet werden kann; es ist nicht mehr notwendig, solche Isolierteile verwenden zu müssen, um Kühlkanäle seitlich neben den Tangentialabschnitten 5 zu bilden.

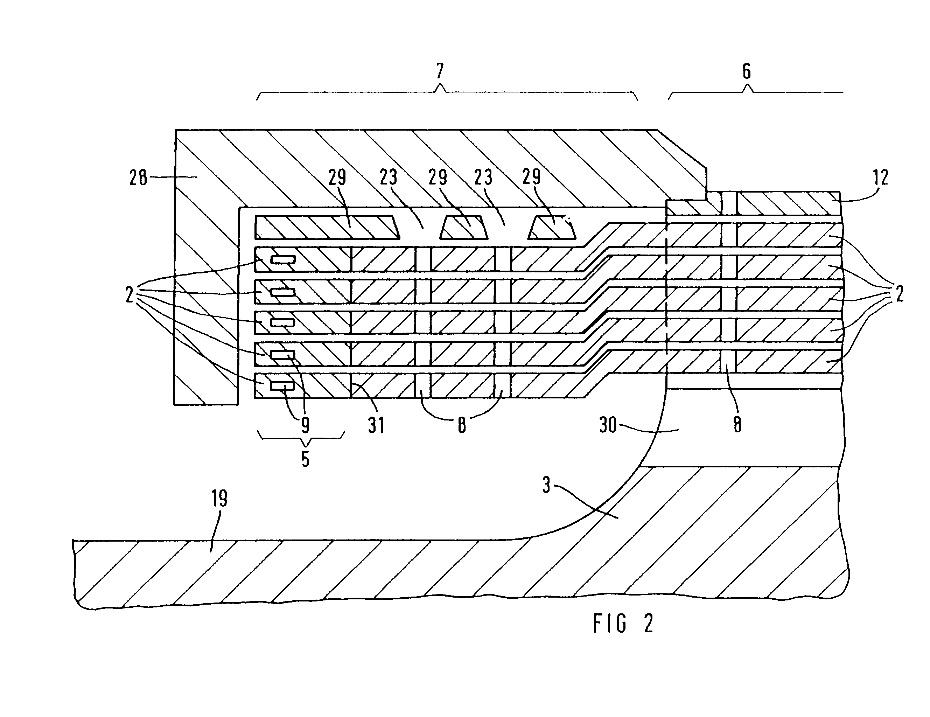

In Figur 1 nicht gezeigt ist eine Kappe, mit welcher der Wikkelkopf 7 abgedeckt werden muß und welche den Wickelkopf 7 gegen die während des Betriebs auftretenden erheblichen Zentrifugalkräfte abstützt. Auch sind die ersten Kühlkanäle 8 der Axialabschnitte 4 nur andeutungsweise dargestellt. Ergänzende Hinweise zu diesen Dingen sind der nachfolgenden Beschreibung der Figur 2 zu entnehmen, die ein anderes Ausführungsbeispiel betrifft, das allerdings entsprechende Parallelen zum Ausführungsbeispiel gemäß Figur 1 aufweist.

Figur 2 zeigt einen Wickelkopf 7 und einen Ausschnitt des Ballenbereichs 6 einer Rotorwicklung gemäß einer anderen Ausführungsform. In Figur 2 dargestellt ist ein entlang der (nicht dargestellten) Rotationsachse 1 gelegter Längsschnitt, der nun auch die ersten Kühlkanäle 8 in den Windungen 2 deutlich sichtbar macht.

Zunächst sei hingewiesen auf die Kappe 28, die den Wickelkopf 7 abdeckt. Zur Distanzierung der Windungen 2 von der Kappe 28 sind Distanzstücke 29 vorgesehen, zwischen denen Abfuhrkanäle 23 für das Kühlgas freigelassen sind.

Eine Kappe, die in ihrer Ausführung weitgehend der Kappe 28 des Ausführungsbeispiels gemäß Figur 2 entspricht, ist im Ausführungsbeipiel gemäß Figur 1 vorzusehen.

Sowohl im Ballenbereich 6 als auch im Wickelkopf 7 erkennt man erste Kühlkanäle 8, welche in etwa radialer Richtung durch die Rotorwicklung hindurchführen. Im Ballenbereich 6 führen die ersten Kühlkanäle 8 durch den Verschlußkeil 12, im Wickelkopf 7 münden die ersten Kühlkanäle 8 in Abfuhrkanäle 23 zwischen der Rotorwicklung und der Kappe 28. Die radiale Ausrichtung der Kühlkanäle 8 ist keineswegs zwingend; je nach praktischer Ausführung kann es vorteilhaft sein, die ersten Kühlkanäle 8 nicht senkrecht zur Rotationsachse 1 wie dargestellt, sondern mit einem von 90° wesentlich abweichenden Winkel und/oder gebogen bezüglich der Rotationsachse 1, zu führen. Da erste Kühlkanäle 8 auch im Wickelkopf 7 vorgesehen sind, erübrigt sich das Vorsehen dritter Kühlkanäle 15 wie im Ausführungsbeispiel gemäß Figur 1. Die Auslegung der zweiten Kühlkanäle 9, deren Mündungen erkennbar sind, entspricht weitgehend der Auslegung gemäß dem Ausführungsbeispiel aus Figur 1, so daß sich ein Eingehen hierauf an dieser Stelle erübrigt.

Die Zufuhr von Kühlgas erfolgt entlang des Wellenstücks 19 zunächst unter den Wickelkopf 7 und, ausgehend von dort, in einen im Ballen 3 vorgesehenen und sich unterhalb der Windungen 2 erstreckenden Nutengrundkanal 30, in welchen die ersten Kühlkanäle 8 des Ballenbereiches 6 einmünden. Von einem Isolierzylinder 20 wie dargestellt in Figur 1 kann eventuell abgesehen werden; es versteht sich allerdings, daß das in Figur 2 nur schematisch angedeutete Ausführungsbeispiel gegebenenfalls zu ergänzen ist durch Isolierteile oder Füllstücke, die das Kühlgas in die Kühlkanäle 8 und 9, bzw. von diesen weg, leiten.

Zu den Figuren 1 und 2 gemeinsam sei abschließend bemerkt, daß der Übersicht halber keine der beiden Figuren Isolierschichten zeigt, die gemäß üblicher Praxis zwischen einzelnen Windungen 2 und/oder zwischen den Windungen 2 und dem Ballen 3 erforderlich sind. Im Rahmen einer praktischen Ausführung sind derartige Isolierschichten selbstverständlich in Betracht zu ziehen und, den Anforderungen des Einzelfalls entsprechend, einzusetzen. Es versteht sich, daß derartige Isolierschichten ggf. Perforationen aufweisen müssen, wenn ein Kühlkanal, beispielsweise ein erster Kühlkanal 8, durch sie hindurch verlaufen muß. Entsprechende Ausführungen sind an sich bekannt, insbesondere aus den zitierten Dokumenten, und ggf. entsprechend vorzusehen.

Die Rotorwicklung gemäß der Erfindung ist ausgezeichnet durch die Möglichkeit der kostengünstigen Herstellung und bietet hinsichtlich der Abfuhr von Wärme, die im Betrieb produziert wird, hervorragend gute Möglichkeiten. Sie ist insbesondere geeignet, um das Kühlsystem eines entsprechend gestalteten Rotors einer dynamoelektrischen Maschine wesentlich zu vereinfachen und die Leistungsgrenze für dynamoelektrische Maschinen, die mit Luft oder anderem Gas gekühlt werden, gegenüber der bisherigen Praxis nochmals deutlich zu erhöhen. Durch damit verbundene Wirkungsgradsteigerungen wird auch ein Beitrag zum Umweltschutz geleistet und ein schonenderer Umgang mit den natürlichen Ressourcen ermöglicht.

## Patentansprüche

1. Rotorwicklung für eine elektrische Maschine, mit einer Rotationsachse (1) und einer Vielzahl elektrisch leitfähiger Windungen (2), die bezüglich der Rotationsachse (1) radial gestapelt sind und mehrere Axialabschnitte (4) sowie mehrere Tangentialabschnitte (5) bilden, wobei jeder Axialabschnitt (4) etwa gerade geformt sowie etwa parallel zur Rotationsachse (1) ausgerichtet ist und zugehörige erste Kühlkanäle (8) besitzt, welche bezüglich der Rotationsachse (1) meridional ausgerichtet sind und alle Windungen (2) durchqueren, und wobei jeder Tangentialabschnitt (5) um die Rotationsachse (1) gebogen ist, zwei Axialabschnitte (4) miteinander verbindet und zugehörige zweite Kühlkanäle (9) besitzt,
**dadurch gekennzeichnet, daß**
jeder zweite Kühlkanal (9) im Inneren einer jeweiligen Windung (2) liegt und strömungstechnisch von den zugecrdneten Axialabschnitten (4) der Windung (2) getrennt ist, wobei jeder zweite Kühlkanal (9) in Umfangsrichtung mündet.

2. Rotorwicklung nach Anspruch 1, bei der die Axialabschnitte (4) teilweise innerhalb von Nuten (10) eines Ballens (3) sowie teilweise außerhalb des Ballens (3) und die Tangentialabschnitte (5) außerhalb des Ballens (3) liegen.

3. Rotorwicklung nach Anspruch 2, bei der jeder erste Kühlkanal (8) innerhalb einer jeweiligen Nut (10) liegt.

4. Rotorwicklung nach Anspruch 3, bei der jedem Axialabschnitt (4) zwischen jedem mit ihm verbundenen Tangentialabschnitt (5) und dem Ballen (3) zumindest ein etwa meridional mäandrierender dritter Kühlkanal (15) zugeordnet ist, welcher außerhalb des Axialabschnitts (4) angeordnet ist.

5. Rotorwicklung nach Anspruch 4, umfassend mehrere Axialabschnitte (4), die bezüglich der Rotationsachse (1) tangential nebeneinander angeordnet sind und zwischen denen elektrisch isolierende Füllstücke (13) liegen, deren jedes zumindest eine Ausnehmung (14) hat, welche mit einem anliegenden Axialabschnitt (4) einen dritten Kühlkanal (15) bildet.

6. Rotorwicklung nach einem der vorigen Ansprüche, bei der
a) der Ballen (3) zwei axiale Enden (18) hat, aus deren jedem ein jeweiliges, unter die jeweiligen Tangentialabschnitte (5) reichendes Wellenstück (19) hervorragt;
b) an jedem axialen Ende (18) die jeweiligen Tangentialabschnitte (5) auf einem jeweiligen, bis zu dem Ballen (3) reichenden und von dem jeweiligen Wellenstück (19) beabstandeten Isolierzylinder (20) angeordnet sind.

7. Rotorwicklung nach Anspruch 6, bei der
a) jeder Tangentialabschnitt (5) eine Mitte (24) sowie zwei Enden (25) aufweist und an jedem Ende (25) mit einem Axialabschnitt (4) verbunden ist, und wobei jeder zweite Kühlkanal (9) sich zu einem Ende (25) sowie zur Mitte (24) öffnet; und
b) jeder Isolierzylinder (20) an jedem Ende (25) und jeder Mitte (24) ein zugehöriges Loch (26,27) aufweist, welches zu einem mittels radialer Wände (21) zwischen dem Isolierzylinder (20) und dem Wellenstück (19) gebildeten Zufuhrkanal (22) oder Abfuhrkanal (23) führt.

8. Rotorwicklung nach einem der Ansprüche 1 bis 6, bei der jeder Tangentialabschnitt (5) eine Mitte (24) sowie zwei Enden (25) aufweist und an jedem Ende (25) mit einem Axialabschnitt (4) verbunden ist, und wobei jeder zweite Kühlkanal (9) sich zu einem Ende (25) sowie zur Mitte (24) öffnet.

9. Rotorwicklung nach einem der vorigen Ansprüche, bei der jeder Tangentialabschnitt (5) zwei Enden (25) aufweist, an deren jedem er mit einem Ende (31) eines zugehörigen Axialabschnitts (4) verbunden, insbesondere hartverlötet ist.

10. Rotorwicklung nach Anspruch 9, bei der jeder Tangentialabschnitt (5) bezüglich der Rotationsachse (1) radial-eben ausgerichtet ist.

11. Verfahren zum Betrieb einer Rotorwicklung nach einem der vorigen Ansprüche, bei dem die Rotorwicklung um die Rotationsachse (1) rotiert , von einem elektrischen Strom durchflossen und mittels eines gasförmigen Kühlmittels, insbesondere Luft, welches durch die Kühlkanäle (8,9,15) strömt, gekühlt wird.

## Claims

1. Rotor winding for an electrical machine, having a rotor axis (1) and a multiplicity of electrically conductive turns (2) which are stacked radially with respect to the rotation axis (1) and form a plurality of axial sections (4) as well as a plurality of tangential sections (5), each axial section (4) being formed approximately in a straight line, being aligned approximately parallel to the rotation axis (1) and having associated first cooling channels (8) which are aligned meridionally with respect to the rotation axis (1) and pass through all the turns (2), and each tangential section (5) being bent about the rotation axis (1), connecting two axial sections (4) to one another and having associated second cooling channels (9),
characterized in that
every other cooling channel (9) is located in the interior of a respective turn (2) and, in flow terms, is separated from the associated axial sections (4) of the turn (2), with every other cooling channel (9) opening in the circumferential direction.

2. Rotor winding according to Claim 1, in which the axial sections (4) are located partially within slots (10) in a rotor body (3) and partially outside the rotor body (3), and the tangential sections (5) are located outside the rotor body (3).

3. Rotor winding according to Claim 2, in which each first cooling channel (8) is located within a respective slot (10).

4. Rotor winding according to Claim 3, in which a third cooling channel (15), which meanders approximately meridionally and is arranged outside the axial section (4), is assigned to each axial section (4), between the rotor body (3) and each tangential section (5) which is connected to said axial section (4).

5. Rotor winding according to Claim 4, comprising a plurality of axial sections (4) which are arranged tangentially side-by-side with respect to the rotation axis (1) and between which electrically insulating fillers (13) are located, each of which has at least one recess (14) which forms a third cooling channel (15) with an adjacent axial section (4).

6. Rotor winding according to one of the preceding claims, in which
a) the rotor body (3) has two axial ends (18), from each of which a respective shaft piece (19) projects which extends under the respective tangential sections (5);
b) at each axial end (18), the respective tangential sections (5) are arranged on a respective insulating cylinder (20) which extends as far as the rotor body (3) and is at a distance from the respective shaft piece (19).

7. Rotor winding according to Claim 6, in which
a) each tangential section (5) has a middle (24) and two ends (25) and is connected at each end (25) to an axial section (4), every other cooling channel (9) being open to one end (25) and to the middle (24); and
b) each insulating cylinder (20) having an associated hole (26, 27) at each end (25) and each middle (24), which hole (26, 27) leads to an inlet channel (22) or outlet channel (23), which are formed by means of radial walls (21) between the insulating cylinder (20) and the shaft piece (19).

8. Rotor winding according to one of Claims 1 to 6, in which each tangential section (5) has a middle (24) and two ends (25), and is connected at each end (25) to an axial section (4), every other cooling channel (9) being open to one end (25) and to the middle (24).

9. Rotor winding according to one of the preceding claims, in which each tangential section (5) has two ends (25), to each of which it is connected, in particular brazed, to one end (31) of an associated axial section (4).

10. Rotor winding according to Claim 9, in which each tangential section (5) is aligned at a constant radius to the rotation axis (1).

11. Method for operating a rotor winding according to one of the preceding claims, in which the rotor winding rotates about the rotation axis (1), as electrical current flowing through it, and is cooled by means of a gaseous coolant, in particular air, which flows through the cooling channels (8, 9, 15).

## Revendications

1. Enroulement rotorique pour une machine électrique, comportant un axe de rotation (1) et un grand nombre de spires (2) électriquement conductrices, qui sont empilées radialement par rapport à l'axe de rotation (1) et forment plusieurs segments axiaux (4), ainsi que plusieurs segments tangentiels (5), chaque segment axial (4) ayant une configuration sensiblement rectiligne, étant orienté à peu près parallèlement à l'axe de rotation (1), et possédant des premiers canaux de refroidissement (8) associés qui présentent une orientation méridionale par rapport à l'axe de rotation (1) et traversent toutes les spires (2), et chaque segment tangentiel (5) étant cintré autour de l'axe de rotation (1), reliant l'un à l'autre deux segments axiaux (4) et possédant des deuxièmes canaux de refroidissement (9) associés,
caractérisé par le fait que chaque deuxième canal de refroidissement (9) se trouve à l'intérieur d'une spire (2), et est séparé du point de vue de la technique des fluides des segments axiaux (4) de la spire (2) qui lui sont affectés, chaque deuxième canal de refroidissement (9) débouchant dans la direction périphérique.

2. Enroulement rotorique selon la revendication 1, dans lequel les segments axiaux (4) sont situés en partie à l'intérieur de rainures (10) d'un sabot (3), ainsi qu'en partie à l'extérieur du sabot (3), et les segments tangentiels (5) se trouvent à l'extérieur du sabot (3).

3. Enroulement rotorique selon la revendication 2, dans lequel chaque premier canal de refroidissement (8) est logé à l'intérieur d'une rainure (10).

4. Enroulement rotorique selon la revendication 3, dans lequel au moins un troisième canal de refroidissement (15) à trajectoire sensiblement méridionale décrivant des méandres et disposé à l'extérieur du segment axial (4), est affecté à chaque segment axial (4) entre le sabot (3) et chaque segment tangentiel (5) relié au segment axial.

5. Enroulement rotorique selon la revendication 4, comprenant plusieurs segments axiaux (4) qui sont agencés en juxtaposition tangentielle vis-à-vis de l'axe de rotation (1), et entre lesquels se trouvent des pièces de garnissage (13) électriquement isolantes dont au moins l'une présente un évidement (14) formant un troisième canal de refroidissement (15) avec un segment axial (4) attenant.

6. Enroulement rotorique selon l'une des revendications précédentes, dans lequel
a) le sabot (3) comporte deux extrémités axiales (18) au-delà de chacune desquelles dépasse une pièce ondulée (19) respective, s'étendant au-dessous des segments tangentiels (5) ;
b) à chaque extrémité axiale (18), les segments tangentiels (5) sont disposés sur un cylindre isolant (20) respectif, s'étendant jusqu'au sabot (3) et à distance de la pièce ondulée (19).

7. Enroulement rotorique selon la revendication 6, dans lequel
a) chaque segment tangentiel (5) comprend un centre (24), ainsi que deux extrémités (25), et est relié à un segment axial (4) par chaque extrémité (25), et chaque deuxième canal de refroidissement (9) s'ouvre en direction d'une extrémité (25), ainsi qu'en direction du milieu (24) ; et
b) chaque cylindre isolant (20) présente, à chaque extrémité (25) et en chaque milieu (24), un trou associé (26, 27) qui mène à un canal d'amenée (22) ou à un canal d'évacuation (23) formé, au moyen de parois radiales (21), entre le cylindre isolant (20) et la pièce ondulée (19).

8. Enroulement rotorique selon l'une des revendications 1 à 6, dans lequel chaque segment tangentiel (5) comprend un milieu (24), ainsi que deux extrémités (25), et est relié à un segment axial (4) par chaque extrémité (25), et chaque deuxième canal de refroidissement (9) s'ouvre en direction d'une extrémité (25), ainsi qu'en direction du milieu (24).

9. Enroulement rotorique selon l'une des revendications précédentes, dans lequel chaque segment tangentiel (5) comporte deux extrémités (25) par chacune desquelles il est relié, notamment par brasage dur, à une extrémité (31) d'un segment axial (4) associé.

10. Enroulement rotorique selon la revendication 9, dans lequel chaque segment tangentiel (5) présente une orientation radiale plane vis-à-vis de l'axe de rotation (1).

11. Procédé pour faire fonctionner un enroulement rotorique selon l'une des revendications précédentes, dans lequel l'enroulement rotorique tourne autour de l'axe de rotation (1), est parcouru par un courant électrique et est refroidi au moyen d'un agent de refroidissement gazeux, en particulier de l'air, circulant par les canaux de refroidissement (8, 9, 15).
